# EUROPEAN PATENT APPLICATION

(11) **EP 3 072 740 A1**
(43) Date of publication of application: **28.09.2016**
(21) Application number: 16162492.9
(22) Date of filing: 25.03.2016
(51) Int. Cl.: B60P 3/20, B65D 88/74, F25D 11/00

(54) **LOW PROFILE REFRIGERATED TRANSPORT UNIT**

(30) Priority: 25.03.2015 US 201562138291 P
(71) Applicant: THERMO KING CORPORATION, Minneapolis Minnesota 55420 (US)
(72) Inventor: KLEINBOHL, Cody A., ROSEMOUNT, MN, 55068 (US); DUFFY, Martin John, EDINA, MN, 55439 (US)
(74) Representative: Intès, Didier Gérard André

(57) **Abstract**

A low profile refrigerated transport unit is described. The low profile refrigerated transport unit includes a low profile container including a first end wall, a second end wall, a top wall and a bottom wall defining a low profile internal space configured to store cargo therein. The low profile protective cage extends from the low profile container. The low profile protective cage is external to the internal space extends from the first end wall. A low profile TRU is disposed within the low profile protective cage and attached to the first end wall external to the internal space. The low profile TRU includes a condensing section, and the condensing section completely external to the internal space. The low profile internal space has a low profile useable cargo length that is greater than a useable cargo length in a similar sized conventional refrigerated transport unit.

## Description

### Field

The disclosure herein relates to a refrigerated transport unit. More particularly, the disclosure herein relates to a low profile refrigerated transport unit for maximizing a usable cargo length within the refrigerated transport unit.

### Background

Existing refrigerated transport units include a transport refrigeration system (TRS) that is configured to work with containers, trailers, and other similar transport units to control a temperature inside the transport unit. Conventionally, the TRS includes a transport refrigeration unit (TRU) that is generally installed on one side of the transport unit where conditioned air is blown into an internal space of the refrigerated transport unit. The TRU generally includes a compressor, a condenser coil, an expansion device and one or more evaporator coils to form a refrigeration circuit. In some instances, the transport unit can be an intermodal container that can be configured to be transported over sea, rail, and truck. In the shipping industry, size specifications for an intermodal container are typically standardized, thereby providing a preset amount of space for storing cargo.

### Summary

The embodiments disclosed herein relate to a refrigerated transport unit. More particularly, the embodiments disclosed herein relate to a low profile refrigerated transport unit for maximizing a usable cargo length within the refrigerated transport unit.

In particular, the embodiments described herein allow for increased usable cargo space within an internal space of the low profile refrigerated transport unit. That is, the embodiments provided herein are directed to a low profile refrigerated transport unit that increases the usable cargo length within an internal space of the transport unit in contrast to a conventional refrigerated transport unit. For example, a conventional 53 foot intermodal container typically has a usable cargo length that is capable of storing 28 standard storage pallets (56 standard storage pallets when two rows of standard storage pallets are stacked on top of another two rows of standard storage pallets). In contrast, a low profile 53 foot intermodal container constructed using the embodiments described herein can be capable of storing, for example, 30 standard storage pallets (60 standard storage pallets when two rows of standard storage pallets are stacked on top of another two rows of standard storage pallets).

The embodiments described herein can provide a low profile refrigerated transport unit that is compliant with Environmental Protection Agency (EPA) Tier IV engine emissions requirements.

In some embodiments, the usable cargo length within an internal space of the low profile refrigerated transport unit can be increased by removing a host evaporator conventionally provided in conventional TRU and instead employing one or more remote evaporator units disposed at a ceiling or top wall within the internal space of the refrigerated transport unit.

In some embodiments, the useable cargo length within an internal space of the low profile refrigerated transport unit can be increased by using a low profile TRU having a low profile condensing section that has a length less than a condensing section of a conventional TRU, and a low profile evaporator section that has a length less than an evaporator section of a conventional TRU. Accordingly, the length of the low profile protective cage can be decreased and the length of the internal space of the low profile intermodal container can be increased.

In some embodiments, the usable cargo length within an internal space of the low profile refrigerated transport unit can be increased by reducing a length of a low profile TRU. This can be achieved by, for example, reducing a length of a condensing section of the low profile TRU, and thereby reducing the length of the low profile TRU within a cage of the low profile refrigerated transport unit; removing one or more skins of the low profile TRU; providing a straight tube as a front frame member of the low profile TRU instead of a curved tube as provided in a conventional TRU; etc. Accordingly, a length of the cage can be reduced and an end wall from which the cage extends can be moved towards the cage such that the length of the internal space within the low profile refrigerated transport unit can be increased. The increased length of the internal space can then provide an increase in the usable cargo length within the internal space.

In some embodiments, the usable cargo length within an internal space of the low profile refrigerated transport unit can be increased by decreasing a thickness (e.g., length) of an end wall from which a cage of the refrigerated transport unit extends. In some embodiments, the usable cargo length within an internal space of the low profile refrigerated transport unit can be increased by removing any stanchions and a flat panel (conventionally provided in a conventional refrigerated transport unit) of an end wall that is within and facing an internal space of the low profile refrigerated transport unit.

In some embodiments, the usable cargo length within an internal space of the low profile refrigerated transport unit can be increased by decreasing the thickness (e.g., length) of one or more rear doors of the refrigerated transport unit and/or decreasing the size of one or more cross section beams used in constructing the transport unit.

In some embodiments, when the low profile TRU does not include an evaporator section, the low profile refrigerated transport unit can be constructed without an evaporator cutout and can thereby reduce efficiency losses associated with air seeping through, for example, gaps between an evaporator section and an evaporator cutout at an end wall between the cage and an internal space of the low profile refrigerated transport unit. Also, one or more components typically provided in an evaporator section of a conventional TRU (e.g., a heat exchanger such as, for example, a shell and tube heat exchanger) can be provided in a condensing section of the low profile TRU Accordingly, the low profile TRU can be isolated from cargo stored in an internal space of the refrigerated transport unit while increasing a usable cargo length of the internal space within the refrigerated transport unit.

In some embodiments, a conventional TRU can be replaced with a low profile TRU within a refrigerated transport unit to provide additional cargo space within an internal space of the refrigerated transport unit. In some embodiments, the low profile TRU can be retro-fitted into a conventional refrigerated transport unit.

In one embodiment, a low profile refrigerated transport unit is described. The low profile refrigerated transport unit includes a low profile container including a first end wall, a second end wall, a top wall and a bottom wall defining a low profile internal space configured to store cargo therein. The low profile protective cage extends from the low profile container. The low profile protective cage is external to the internal space extends from the first end wall. A low profile TRU is disposed within the low profile protective cage and attached to the first end wall external to the internal space. The low profile TRU includes a condensing section, and the condensing section completely external to the internal space. The low profile internal space has a low profile useable cargo length that is greater than a useable cargo length in a similar sized conventional refrigerated transport unit.

Also, in another embodiment, a method of manufacturing a low profile refrigerated transport unit. The method includes providing a 53 foot intermodal container. The 53 foot intermodal container includes an internal space defined by a first end wall, a second end wall, a top wall and a bottom wall. The internal space is configured to store cargo therein. The first end wall has a thickness between 4 to 4.5 inches. The second end wall includes a rear door and has a maximum thickness of 6 inches. A low profile protective cage is attached to the first end wall and external to the internal space. The method also includes providing a low profile TRU disposed within the low profile protective cage. The low profile TRU includes a condensing section. A useable cargo length for storing cargo in the internal space is between 604 and 606 inches.

In another embodiment, a low profile refrigerated transport unit is described. The low profile refrigerated transport unit includes a low profile container, a low profile protective cage, a low profile TRU and a remote evaporator unit. The low profile container includes a first end wall, a second end wall, a top wall and a bottom wall defining an internal space configured to store cargo therein. The low profile protective cage extends from the low profile container, is external to the internal space, and extends from the first end wall. The low profile TRU is disposed within the low profile protective cage and attached to the first end wall external to the internal space. The low profile TRU is configured to be isolated from the internal space the low profile TRU includes a condensing section, and the low profile TRU is completely external to the internal space. The remote evaporator unit is disposed on the top wall within the internal space, the remote evaporator is configured to be in fluid communication with the low profile TRU. Also, the low profile TRU and the remote evaporator are configured to provide environmental control within the internal space.

In another embodiment, a method of increasing a usable cargo space within an internal space of refrigerated transport unit is provided. The method includes providing a low profile transport refrigeration unit with a condensing section and without an evaporator section, an evaporator and a blower, the low profile transport refrigeration unit being disposed completely external to the internal space. The method also includes providing a remote evaporator unit attached to a ceiling or top wall of the refrigerated transport unit within the internal space.

In yet another embodiment, a method of retro-fitting a refrigerated transport unit to create more usable cargo space within the refrigerated transport unit is provided. The method includes removing a transport refrigeration unit that includes a condensing section and an evaporator section, the evaporator section extending into an internal space of the refrigerated transport unit. The method also includes attaching a low profile transport refrigeration unit to a front wall of the refrigerated transport unit completely external to the internal space and within a protective cage of the refrigerated transport unit, the low profile transport refrigeration unit including a condensing section and not including an evaporator section, an evaporator and an evaporator blower. Also, the method includes, attaching a remote evaporator unit to a ceiling of the refrigerated transport within the internal space.

Also, in another embodiment a method of manufacturing a low profile refrigerated transport unit is provided. The method includes providing a 53 foot intermodal container. The 53 foot intermodal container including a low profile protective cage having a length between 20 to 20.5 inches, an internal space defined by a first end wall, a second end wall, a top wall and a bottom wall, the internal space configured to store cargo therein. The internal space having a length between 604 to 606 inches, the first end wall having a thickness between 4 to 4.5 inches, the second end wall including a rear door, and the second end wall having a maximum thickness of 6 inches. The method also includes providing a low profile transport refrigeration unit (TRU) external to the internal space and disposed within the low profile protective cage. The low profile TRU including a condensing section and not including an evaporator section extending into the internal space. The low profile TRU having a length between 19 and 20.5 inches. Also, a useable cargo length for storing cargo in the internal space is between 604 and 606 inches.

Other features and aspects will become apparent by consideration of the following detailed description and accompanying drawings.

### Brief Description of the Drawings

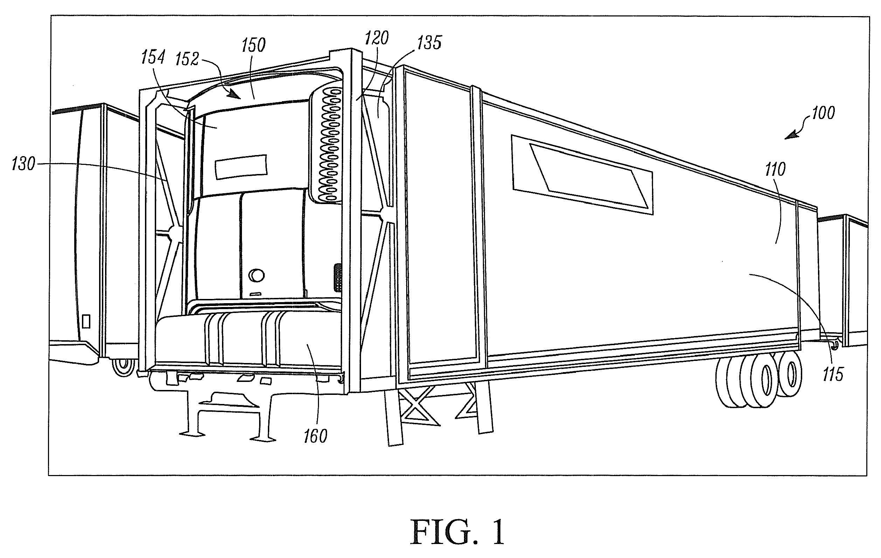

Fig. 1 illustrates a perspective view of a conventional refrigerated transport unit that includes an intermodal container and a TRU.

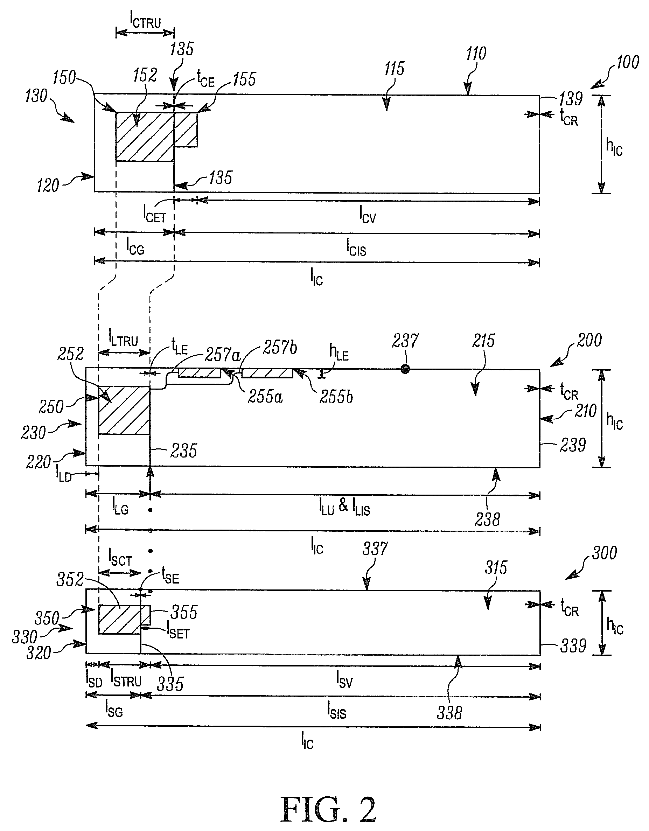

Fig. 2 illustrates side views of a conventional refrigerated transport unit that includes an intermodal container with a TRU, a low profile refrigerated transport unit that includes a low profile intermodal container with a low profile TRU according to a first embodiment, and a second low profile refrigerated transport unit that includes a second low profile intermodal container with a second low profile TRU according to a second embodiment.

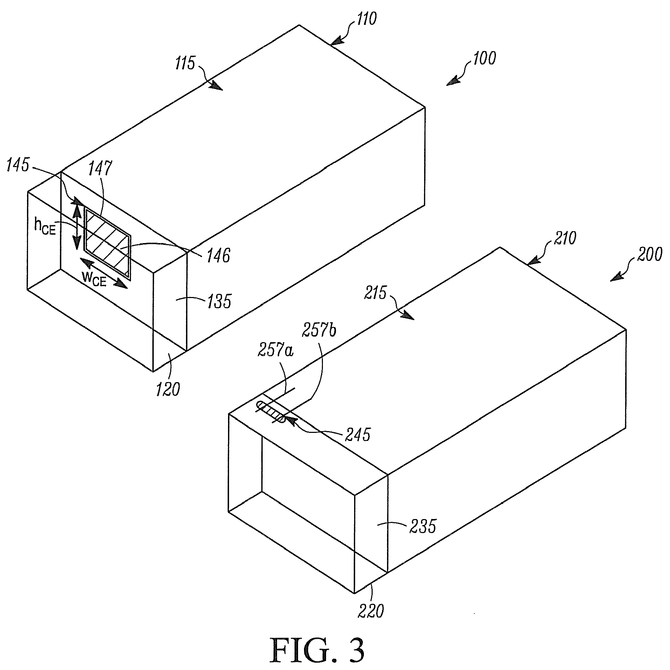

Fig. 3 illustrates perspective views of a conventional refrigerated transport unit that includes an intermodal container without a TRU installed and a low profile refrigerated transport unit that includes a low profile intermodal container without a low profile TRU installed, according to the first embodiment.

### Detailed Description

The embodiments described herein are directed to a refrigerated transport unit. More particularly, the embodiments relate to a low profile refrigerated transport unit.

In particular, the embodiments described herein allow for increased usable cargo space within an internal space of the low profile refrigerated transport unit. That is, the embodiments provided herein are directed to a low profile refrigerated transport unit that increases the usable cargo length within an internal space of the transport unit in contrast to a conventional refrigerated transport unit. For example, a conventional 53 foot intermodal container typically has a usable cargo length that is capable of storing 28 standard storage pallets (56 standard storage pallets when two rows of standard storage pallets are stacked on top of another two rows of standard storage pallets). In contrast, a low profile 53 foot intermodal container constructed using the embodiments described herein can be capable of storing, for example, 30 standard storage pallets (60 standard storage pallets when two rows of standard storage pallets are stacked on top of another two rows of standard storage pallets).

While the embodiments discussed below are discussed with respect to a container, and more particularly an intermodal container, one skilled in the art would recognize the embodiments discussed herein can be provided for any type of transport unit including, for example, a container on a flat car, an over the road trailer, a truck, a box car, or other similar transport units.

Fig. 1 illustrates a perspective view of a conventional refrigerated transport unit 100 that includes a conventional intermodal container 110, a conventional TRU 150 and optionally a fuel tank 160 and/or a generator set (not shown). The conventional intermodal container 110 is a standardized reusable box that can store cargo and be transported via truck, rail or sea. The conventional intermodal container 110 can be made of, for example, steel. The conventional intermodal container 110 includes a conventional protective cage 120 disposed at a first end 130 of the conventional intermodal container 110. The conventional protective cage 120 is configured to extend from an end wall 135 of the conventional intermodal container 110. The conventional protective cage 120 is configured to protect the conventional TRU 150 and the optional fuel tank 160 and/or generator set during shipment. As shown in Fig. 1, the conventional protective cage 120 is formed of multiple beams (e.g., steel beams) that form a protective structure to surround the conventional TRU 150. The first end 130 is typically a front end of the conventional intermodal container 110 and the end wall 135 is typically a front wall of the conventional intermodal container 110. The conventional intermodal container 110 also includes a second end wall (not shown) opposite the end wall 135. The second end wall typically includes one or more rear doors (not shown) that allow cargo to be placed into and taken out of an internal space 115 of the conventional intermodal container 110.

The conventional TRU 150 and the optional fuel tank 160 and/or generator set are attached to the conventional intermodal container 110 at the first end 130 and are disposed within the conventional protective cage 120. In some embodiments, the conventional TRU 150 is attached to the end wall 135 via one or more mounting pads disposed between a rear frame (not shown) of the conventional TRU 150 and a frame tubing (not shown) on the end wall 135. The front portion of the conventional TRU 150 is covered by an outer skin(s) 154 to prevent components within the conventional TRU 150 from being exposed, for example, to outside elements (e.g., rain, wind, snow, dirt, etc.). Also, in some embodiments, the conventional TRU 150 includes a frame (not shown) with a skin mounting bracket (not shown) on which the outer skin(s) 154 is attached. The frame includes a curved frame bar (not shown) disposed at a front, bottom end of the conventional TRU 150. Further, in some embodiments, a side of the end wall 135 within and facing the internal space 115 of the conventional intermodal container 110 can include one or more stanchions (not shown) (e.g., 2 x 4 stanchion(s)) and/or a flat panel that are configured to direct return air from within the internal space 115 into an evaporator section (not shown) of the conventional TRU 150.

The conventional TRU 150 is configured to provide climate control (e.g., temperature, atmosphere, humidity, etc.) within an internal space 115 of the conventional intermodal container 110. The conventional TRU 150 includes a condensing section 152 located within the conventional protective cage 120 and the evaporator section (not shown) that is configured to extend through an evaporator cutout (not shown) of the end wall 135 into the internal space 115 of the conventional intermodal container 110. The condensing section 152 typically includes, for example, a condenser, a condenser fan, a compressor, and an expansion valve. The evaporator section typically includes, for example, a main evaporator, one or more evaporator blowers, a heat exchanger (e.g., a shell and tube heat exchanger), and associated evaporator components.

The optional generator set includes a prime mover (not shown) and a machine (not shown) that are configured to provide power to the conventional TRU 150. In some embodiments, the conventional TRU 150 can include its own prime mover and machine to provide power to the conventional TRU 150.

In some embodiments, the internal space 115 can be divided into a plurality of zones separated by temporary or permanent walls. When the internal space 115 is divided into two or more zones, the conventional TRU 150 can be configured to provide different climate parameters (e.g., temperature, atmosphere, humidity, etc.) within each zone of the internal space 115.

Fig. 2 illustrates side views of the conventional refrigerated transport unit 100 that includes the conventional intermodal container 110 with the conventional TRU 150,a low profile refrigerated transport unit 200 that includes a low profile intermodal container 210 with a low profile TRU 250, according to a first embodiment, and a low profile refrigerated transport 300 that includes a second low profile intermodal container 310 with a low profile TRU 350. It is to be appreciated that Fig. 2 is not drawn to scale.

The conventional intermodal container 110, the low profile intermodal container 210, and the second low profile intermodal container 310 have a length *l*_{IC} and a height *h*_{IC}. For illustrative purposes, the length *l*_{IC} of the conventional intermodal container 110, the low profile intermodal container 210, and the second low profile intermodal container 310 is approximately 53 feet (∼636 inches) and the height *h*_{IC} of the conventional intermodal container 110, the low profile intermodal container 210, and the second low profile intermodal container is approximately 9.5 feet (∼114 inches). It will be appreciated that in other embodiments, the low profile intermodal containers 210, 310 can be any standardized or non-standardized length, as required by the user.

For the conventional intermodal container 110, the conventional protective cage 120 has a length *l_{CG},* the internal space 115 has a length *l*_{CIS}*,* the end wall 135 has a thickness (e.g., length) *t*_{CE}*,* and the second end wall 139 (including, for example, one or more rear doors) has a thickness *t*_{CR}. For a 53 foot conventional intermodal container, the length *l*_{CG} is about 25 to 26 inches, the length *l*_{CIS} is about 599 to 601 inches, a thickness *t*_{CE} is about 4 to 4.5 inches, and the thickness *t*_{CR} is about 4 inches (e.g., at a top of the second end wall 139) to about 6 inches (e.g., at a bottom of the second end wall 139). Within the conventional protective cage 120, the condensing section 152 of the conventional TRU 150 has a length *l*_{CTRU}. For a 53 foot conventional intermodal container, the length *l*_{CTRU} is about 25 to 26 inches.

The conventional TRU 150 includes an evaporator section 155 that is configured to extend through the end wall 135 and into the internal space 115. The evaporator section 155 has a length *l*_{CET} with a portion of the evaporator section 155 extending into the internal space 115. For a 53 foot conventional intermodal container, the length *l*_{CET} is about eight to nine inches with the evaporator section 155 extending into the internal space 115 about 5 to 6 inches. Accordingly, the conventional intermodal container 110 has a usable cargo length *l*_{CU} of about 593 to 596 inches.

Standard freight pallets have a length of about 40 inches. Accordingly, the conventional intermodal container 110 can fit 14 standard pallets within the usable cargo length *l*_{CU}. When two rows of pallets are arranged next to each other, the conventional intermodal container 110 can fit 28 standard pallets within the usable cargo length *l*_{CU} (e.g., ∼593 to 596 inches) of the internal space 115. In some cases the two rows of pallets can be stacked onto another two rows of pallets, when height limits are not exceeded, to fit a total of 56 standard pallets within the usable cargo length *l*_{CU}*.* This also provides about 36 inches of additional length of the usable cargo length *l*_{CU} (e.g., a buffer zone) that can be used, for example, for directing airflow throughout the internal space 115 and for loading pallets into the conventional intermodal container 110 and for slight variations that may occur when loading pallets into the conventional intermodal container 110.

The low profile refrigerated transport units 200, 300 allows for increased usable cargo space within an internal space 215, 315 of the low profile refrigerated transport units 200, 300 than provided by the conventional refrigerated transport unit 100.

The low profile refrigerated transport units 200, 300 can be a standardized reusable box that can store cargo and be transported via truck, rail or sea. The low profile intermodal containers 210, 310 can be made of, for example, steel. The low profile intermodal containers 210, 310 include a low profile protective cage 220, 320 disposed at a first end 230, 330 of the low profile intermodal containers 210, 310. The low profile protective cages 220, 320 are configured to extend from an end wall 235, 335 of the low profile intermodal container 210, 310. The low profile protective cage 220, 320 can be formed of multiple beams (e.g., steel beams) that form a protective structure to surround the low profile TRU 250, 350. The first end 230, 330 can be a front end of the low profile intermodal container 210, 310 and the end wall 235, 335 can be a front wall of the low profile intermodal container 210, 310. The low profile TRU 250, 350 is attached to the low profile intermodal container 210, 310 at the first end 230, 330 to the end wall 235, 335 and is disposed within the low profile protective cage 220, 320. The low profile protective cage 220, 320 is configured to protect the low profile TRU 250, 350 and an optional generator set (not shown) and/or fuel tank (not shown) during shipment. The low profile intermodal container 210, 310 also includes a second end wall 239, 339 opposite the end wall 235, 335. The second end wall 239, 339 can be a rear wall and can include one or more rear doors (not shown) that allow cargo to be placed into and taken out of the internal space 215, 315 of the low profile intermodal container 210, 310. The low profile intermodal container 210, 310 also includes a top wall or ceiling 237, 337 and a bottom wall or floor 238, 338.

According to the first embodiment, the low profile TRU 250 is disposed completely external to the internal space 215 and is configured to provide climate control (e.g., temperature, atmosphere, humidity, etc.) within the internal space 215 of the low profile intermodal container 210. The low profile TRU 250 includes a condensing section 252 located within the low profile protective cage 220. The condensing section 252 can include, for example, a condenser, a condenser fan, one or more components provided in an evaporator section of a conventional TRU (e.g., the conventional TRU 150), etc. In some embodiments, the low profile TRU 250 can include its own prime mover (e.g., engine) and machine (e.g., engine) and/or battery system to provide power to the low profile TRU 250.

In some embodiments, the internal space 215 can be divided into a plurality of zones separated by temporary or permanent walls. When the internal space 215 is divided into two or more zones, the low profile TRU 250 can be configured to provide different climate parameters (e.g., temperature, atmosphere, humidity, etc.) within each zone of the internal space 215.

In contrast to the conventional TRU 150, the low profile TRU 250 does not include an evaporator section that extends through the end wall 235 into the internal space 215 of the low profile intermodal container 210. Rather, the low profile TRU 250 is fluidly and electrically connected to a plurality of low profile remote evaporator units 255a,b located within the internal space 215 and attached to the top wall 237 of the low profile intermodal container 210. The low profile TRU 250 is fluidly and electrically connected to the low profile remote evaporator unit 255a via a first communication line 257a and the low profile TRU 250 is fluidly and electrically connected to the low profile remote evaporator unit 255b via a second communication line 257b. The first and second communication lines 257a,b are configured to provide fluid (e.g., refrigerant) and/or electrical power from the low profile TRU 250 to the remote evaporator units 255a, b. In some embodiments, a height *h*_{LE} of the low profile remote evaporator units 255a,b is sized to allow two standard pallets with cargo stacked on top of each other to fit within any portion of the internal space 215 without touching or interfering with the low profile remote evaporator units 255a,b. In one embodiment, the height *h*_{LE} of each of the low profile remote evaporator units 255a,b can be about seven to eight inches.

Accordingly, the low profile TRU 250 does not include a main evaporator, one or more evaporator blowers, and any associated evaporator components. Also, in some embodiments, other components traditionally within the evaporator section 155 of the conventional TRU 150 (e.g., a heat exchanger such as, for example, a shell and tube heat exchanger) can be provided in the condensing section 252 of the low profile TRU 250. These features allow for an increase in a usable cargo length *l*_{LU} of the internal space 215 of the low profile intermodal container 210.

Further, in some embodiments, the low profile TRU 250 can be attached to the end wall 235 without the use of one or more mounting pads disposed between a rear frame (not shown) of the low profile TRU 250 and a frame tubing (not shown) on the end wall 235. Also, in some embodiments, the low profile TRU 250 can be constructed without an outer skin(s) provided on a frame (not shown) of the low profile TRU 250 and a skin mounting bracket on the frame for mounting an outer skin(s). That is, in some embodiments, in order to increase the useable cargo length within the low profile refrigerated transport unit 200, the low profile TRU 250 can be provided without an outer skin at the risk of potentially exposing components within the low profile TRU 250 to, for example, outside elements (e.g., rain, wind, snow, dirt, etc.). Further, in some embodiments, the frame can include a straight frame bar (not shown) disposed at a front, bottom end of the low profile TRU 250 as opposed to a curved frame bar typically provided on the conventional TRU 150. These features can decrease a length *l*_{LTRU} of the low profile TRU 250 (particularly the condensing section 252) within the low profile protective cage 220.

By decreasing the length *l*_{LTRU} of the low profile TRU 250, the end wall 235 can be moved such that a length *l*_{LG} of the low profile protective cage 220 is decreased and a length *l*_{LIS} of the internal space 215 can be increased. Accordingly, the condensing section 252 of the low profile TRU 250 is moved closer to a front of the low profile protective cage 220. Further, since the low profile TRU 250 is configured not to include an evaporator section, a usable cargo length *l*_{LU} within the internal space 215 can be equal to the length *l*_{LIS} of the internal space 215. In some embodiments, a length *l*_{LD} between the front of the low profile protective cage 220 and a front end of the low profile TRU 250 can be between about 0-1inches. Also, the end wall 235 can have a thickness (e.g., length) *t*_{LE} and the second end wall 239 (including, for example, one or more rear doors) can have a thickness *t*_{LR}.

For a 53 foot conventional intermodal container, the length *l*_{LTRU} can be about 19 to 20.5 inches, the length *l*_{LG} can be about 20 to 20.5 inches, the length *l*_{LIS} can be about 604 to 606 inches, the thickness *t*_{LE} can be about 4 to 4.5 inches, and the thickness *t*_{LR} can be about 4 inches (e.g., at a top of the second end wall 239) to about 6 inches (e.g., at a bottom of the second end wall 239). Thus, the usable cargo length *l*_{LU} within the internal space 215 can be about 604 to 606 inches.

Accordingly, the low profile intermodal container 210 can fit 15 standard pallets within the usable cargo length *l*_{LU}. When two rows of pallets are arranged next to each other, the low profile intermodal container 210 can fit 30 standard pallets within the usable cargo length *l*_{LU} (e.g., ∼604 to 606 inches) of the internal space 215 without interfering with the remote evaporator units 255a,b. In some cases the two rows of pallets can be stacked onto another two rows of pallets, when height limits are not exceeded, to fit a total of 60 standard pallets within the usable cargo length *l*_{LU}. This also provides about 2 to 5 inches of additional length of the usable cargo length (e.g., a buffer zone), for example, for directing airflow within the internal space 215 and loading pallets into the low profile intermodal container 210 and for slight variations that may occur when loading pallets into the low profile intermodal container 210.

In some embodiments, the usable cargo length *l*_{LU} can be further increased by reducing a thickness *t*_{LR} of a rear door (not shown) located at the second end wall 239 of the low profile intermodal container 210, and/or by reducing a thickness *t*_{LE} of an end wall 235 of the low profile intermodal container 210. Also, in some embodiments, the usable cargo length *l*_{LU} can be further increased by removing one or more stanchions (not shown) (e.g., 2 x 4 stanchion(s)) and/or a flat panel provided on a side of the end wall 235 within the internal space 215 of the low profile intermodal container 210.

According to the second embodiment, a low profile refrigerated transport unit 300 is provided with a configuration different from the low profile refrigerated transport unit 200. For the low profile intermodal container 310, the second low profile protective cage 320 has a length *l*_{SG}, the internal space 315 has a length *l*_{SIS}. In this embodiment, the second low profile TRU 350 can be, for example, a TRU that has a lower profile condensing section 352 than the conventional condensing section 152 and the low profile condensing section 252 of the low profile TRU 250 of the first embodiment. In this embodiment, the length l_{STRU} of the second low profile TRU 350 is about equal to the length l_{LTRU} of the low profile TRU 250 of the first embodiment. That is, the second low profile TRU 350 includes a lower profile condensing section 352 having a length *l*_{SCT} that is smaller than the low profile TRU 250 and the condensing section 152 of the conventional TRU 150. The lower profile condensing section 352 is located within the low profile protective cage 320. Also, the length *l*_{SG} of the second low profile protective cage 320 is smaller than the length *l*_{CG} of the conventional protective cage 120 and the length *l*_{LG} of the low profile protective cage 220. In some embodiments, the second low profile TRU 350 can include its own prime mover (e.g., engine) and machine (e.g., engine) and/or battery system to provide power to the second low profile TRU 350.

The second low profile TRU 350 also includes an evaporator section 355 (unlike the low profile TRU 250 in the first embodiment) that is configured to extend through the end wall 335 and into the internal space 315. The evaporator section 355 has a length *l*_{SET} with a portion of the evaporator section 355 extending into the internal space 315. The lower profile condensing section 352 can include, for example, a condenser, a condenser fan, etc.

In some embodiments, the internal space 315 can be divided into a plurality of zones separated by temporary or permanent walls. When the internal space 315 is divided into two or more zones, the second low profile TRU 350 can be configured to provide different climate parameters (e.g., temperature, atmosphere, humidity, etc.) within each zone of the internal space 315.

By decreasing the length *l*_{SCT} of the lower profile condensing section 352, the length *l*_{SG} of the second low profile protective cage 320 can be decreased. Accordingly, the end wall 335 can be moved such that a length *l*_{SIS} of the internal space 315 can be increased. Accordingly, the evaporator section 355 of the second low profile TRU 350 can still be provided while still providing a usable cargo length *l*_{SU} within the internal space 315 that can be about equal to the length *l*_{LIS} of the internal space 215 of the first embodiment. In some embodiments, a length *l*_{SD} between the front of the low profile protective cage 320 and a front end of the second low profile TRU 350 can be between about 0-1inches.

For the 53 foot intermodal container, the length *l*_{STRU} of the second low profile TRU can be about 21.2 inches with the length *l*_{SCT} being about 16.7 inches and the length *l*_{SET} being about 4.5 inches with the low profile evaporator section 355 extending into the internal space 315 about .5 inches. The length *l*_{SG} can be about 20.7 to 21.7 inches and the length *l*_{SIS} can be about 604.5 to 606.5inches, the thickness *t*_{SE} can be about 4 to 4.5 inches, and the thickness *t*_{SR} can be about 4 inches (e.g., at a top of the second end wall 339) to about 6 inches (e.g., at a bottom of the second end wall 339). When the thickness *t*_{SE} is 4.5 inches, the low profile evaporator section 355 may not extend into the internal space 315. The usable cargo length *l*_{SU} within the internal space 315 can be about 604 to 606 inches.

Accordingly, the low profile intermodal container 310 can fit 15 standard pallets within the usable cargo length *l*_{SU}. When two rows of pallets are arranged next to each other, the low profile intermodal container 310 can fit 30 standard pallets within the usable cargo length *l*_{SU} (e.g., -604 to 606 inches) of the internal space 315 without interfering with the evaporator section 355. In some cases the two rows of pallets can be stacked onto another two rows of pallets, when height limits are not exceeded, to fit a total of 60 standard pallets within the usable cargo length *l*_{SU}. This also provides about 2 to 5 inches of additional length of the usable cargo length (e.g., a buffer zone), for example, for directing airflow within the internal space 315 and loading pallets into the low profile intermodal container 310 and for slight variations that may occur when loading pallets into the low profile intermodal container 310.

In some embodiments, the usable cargo length *l*_{SU} can be further increased by reducing a thickness *t*_{SR} of a rear door (not shown) located at the second end wall 339 of the low profile intermodal container 310, and/or by reducing a thickness *t*_{SE} of an end wall 335 of the low profile intermodal container 310. Also, in some embodiments, the usable cargo length *l*_{SU} can be further increased by removing one or more stanchions (not shown) (e.g., 2 x 4 stanchion(s)) and/or a flat panel provided on a side of the end wall 335 within the internal space 315 of the low profile intermodal container 210.Fig. 3 illustrates perspective views of the conventional refrigerated transport unit 100 that includes the conventional intermodal container 110 without a conventional TRU (e.g., the conventional TRU 150 shown in Figs. 1 and 2) installed and the low profile refrigerated transport unit 200 that includes the low profile intermodal container 210 without a low profile TRU (e.g., the low profile TRU 250) installed, according to the first embodiment.

As shown in Fig. 3, the conventional intermodal container 110 includes the end wall 135 from which the conventional protective cage 120 extends. The end wall 135 includes an evaporator cutout 145 into the internal space 115. When installed, a conventional TRU (e.g., the conventional TRU 150 shown in Fig. 1) is configured to attach to the end wall 135 such that an evaporator section (not shown) (e.g., the evaporator section 155 shown in Fig. 2) of the conventional TRU 150 fits through the evaporator cutout 145 and resides in the internal space 115 of the conventional intermodal container 110. The evaporator cutout 145 can include an aperture 146 and a gasket surface 147 that surrounds the aperture 146. In order to allow an evaporator section 155 of the conventional TRU 150 to fit within the evaporator cutout 145, the evaporator cutout 145 typically has a height *h*_{CE} and a width *w*_{CE}. For a 53 foot conventional intermodal container, the height *h*_{CE} is typically about 52 inches and the width *w*_{CE} is typically about 72.8 inches. In this instance, the gasket surface 147 can be about 3 inches in height along the horizontal edges of the evaporator cutout 145 and can be about 3 inches in width along the vertical edges of the evaporator cutout 145. Also, in this instance, the aperture 146 can be about 46 inches in height and about 66.8 inches in width.

The low profile intermodal container 210 includes the end wall 235 from which the low profile protective cage 220 extends. The end wall 235 does not require an evaporator or cutout (e.g., the evaporator cutout145) as required by a conventional intermodal container (e.g., the conventional intermodal container 110) because the low profile TRU 250 does not include or require an evaporator section (e.g., the evaporator section 155 shown in Fig. 2) that fits in the internal space 215. Rather, the end wall 235 includes a communication hole 245 that can be significantly smaller than an evaporator cutout. The communication hole 245 is configured to allow first and second communication lines 257a, b to travel between the low profile protective cage 220 to the internal space 215. In some embodiments, the communication hole 245 can have a height of about ½ to 1 inch and a width of about 2 to 2.5 inches. While Fig. 3 shows only a single communication hole 245, in some embodiments the end wall 235 can include two or more communication holes based on the number communication lines traveling between the low profile protective cage 220 to the internal space 215. Because the size of the communication hole 245 can be significantly smaller than the size of an evaporator cutout, efficiency losses associated with air seeping through, for example, gaps between an evaporator section and an evaporator cutout can be reduced.

While not shown in Fig. 3, the end wall 335 of the low profile intermodal container 310 can be similar to the end wall 135 of the conventional intermodal container 110. In particular, the end wall 335 can includes an evaporator cutout into the internal space 315. When installed, a second low profile TRU (e.g., the second low profile TRU 350 shown in Fig. 2) is configured to attach to the end wall 335 such that an evaporator section (e.g., the low profile evaporator section 355 shown in Fig. 2) of the second low profile TRU 350 fits through the evaporator cutout and resides in the internal space 315 of the low profile intermodal container 310. The evaporator cutout can include an aperture and a gasket surface that surrounds the aperture. In order to allow the evaporator section of the second low profile TRU 350 to fit within the evaporator cutout, the evaporator cutout typically has a certain height and width. For a 53 foot conventional intermodal container, the height can be typically about 52 inches and the width *w*_{CE} can be about 72.8 inches. In this instance, the gasket surface can be about 3 inches in height along the horizontal edges of the evaporator cutout and can be about 3 inches in width along the vertical edges of the evaporator cutout. Also, in this instance, the aperture can be about 46 inches in height and about 66.8 inches in width.

### Aspects

Any of aspects 1-8, 9-13, 14-16, 17-20, 21-26 can be combined.

Aspect 1. A low profile refrigerated transport unit, comprising:
a low profile container including a first end wall, a second end wall, a top wall and a bottom wall defining a low profile internal space configured to store cargo therein;
a low profile protective cage extending from the low profile container, the low profile protective cage being external to the internal space, and the low profile protective cage extending from the first end wall;
a low profile transport refrigeration unit (TRU) disposed within the low profile protective cage and attached to the first end wall external to the internal space, the low profile TRU including a condensing section, and the condensing section completely external to the internal space;
wherein the low profile internal space has a low profile useable cargo length that is greater than a useable cargo length in a similar sized conventional refrigerated transport unit.

Aspect 2. The low profile refrigerated transport unit of aspect 1, wherein the low profile container is a low profile intermodal container.

Aspect 3. The low profile refrigerated transport unit of either of aspects 1 or 2, further comprising:
a remote evaporator unit disposed on the top wall within the low profile internal space, the remote evaporator configured to be in fluid communication with the low profile TRU, wherein the low profile TRU and the remote evaporator are configured to provide environmental control within the low profile internal space, and
wherein the low profile TRU is completely external to the low profile internal space and configured to be isolated from the low profile internal space.

Aspect 4. The low profile refrigerated transport unit of aspect 3, further comprising a communication line connecting the low profile TRU disposed external of the low profile internal space with the remote evaporator unit disposed within the low profile internal space,
wherein the first end wall includes a communication hole and the communication line passing through the first end wall via the communication hole.

Aspect 5. The low profile refrigerated transport unit of aspect 3, wherein the low profile TRU does not include an evaporator section, an evaporator, and an evaporator blower extending through the first end wall into the internal space.

Aspect 6. The low profile refrigerated transport unit of any one of aspects 1-5, wherein the condensing section includes a condenser, a condenser fan, a compressor, an expansion valve, and a shell and tube heat exchanger.

Aspect 7. The low profile refrigerated transport unit of any one of aspects 1, 2 and 6, wherein the low profile transport refrigeration unit (TRU) includes an evaporator section, an evaporator, and an evaporator blower extending through the first end wall into the internal space.

Aspect 8. The low profile refrigerated transport unit of any one of aspects 1-7, wherein the low profile refrigerated transport unit is a 53 foot low profile intermodal container and includes a low profile useable cargo length between 604 and 606 inches, and the conventional refrigerated transport unit is a 53 foot conventional intermodal container that includes a conventional useable cargo length between 593 and 596 inches.

Aspect 9. A method of manufacturing a low profile refrigerated transport unit, the method comprising:
providing a 53 foot intermodal container, the 53 foot intermodal container including:
   an internal space defined by a first end wall, a second end wall, a top wall and a bottom wall, the internal space configured to store cargo therein, the first end wall having a thickness between 4 to 4.5 inches; the second end wall including a rear door, the second end wall having a maximum thickness of 6 inches;
   a low profile protective cage attached to the first end wall and external to the internal space;
providing a low profile transport refrigeration unit (TRU) disposed within the low profile protective cage, the low profile TRU including a condensing section;
wherein a useable cargo length for storing cargo in the internal space is between 604 and 606 inches.

Aspect 10. The method of aspect 9, wherein the low profile TRU includes a condensing section and not including an evaporator section extending into the internal space, the low profile TRU having a length between 19 and 20.5 inches, the internal space having a length between 604 to 606 inches.

Aspect 11. The method of aspect 10, further comprising providing a communication hole between the low profile protective cage and the internal space, the communication hole having a height between .5 to 1 inch and a width between 2 to 2.5 inches in the first end wall.

Aspect 12. The method of aspect 10, wherein the low profile TRU does not include an outer skin and a skin mounting bracket.

Aspect 13. The method of aspect 9, wherein the low profile TRU includes a condensing section disposed within the low profile protective cage and an evaporator section extending into the internal space, the condensing section having a length of about 16.7 inches, and the evaporator section having a length of about 4.5 inches and extending into the internal space by .5 inches, the internal space having a length between 604.5 to 606.5 inches.

Aspect 14. A method of retro-fitting a refrigerated transport unit to create more usable cargo space within the refrigerated transport unit, the method comprising:
removing a conventional transport refrigeration unit that includes a condensing section and an evaporator section, the evaporator section extending into an internal space of the refrigerated transport unit;
attaching a low profile transport refrigeration unit to a front wall of the refrigerated transport unit completely external to the internal space and within a protective cage of the refrigerated transport unit, the low profile transport refrigeration unit including a condensing section and not including an evaporator section, an evaporator and an evaporator blower;
attaching a remote evaporator unit to a ceiling of the refrigerated transport within the internal space.

Aspect 15. The method of aspect 14, further comprising:
removing at least one of a flat panel and a stanchion attached to a front wall of the refrigerated transport unit within the internal space.

Aspect 16. The method of aspect 14, wherein the low profile refrigerated transport unit includes a shell and tube heat exchanger, a condenser and a condenser fan.

Aspect 17. A low profile transport refrigeration unit (TRU) comprising:
a condensing section including a compressor, an expansion valve, a condenser, a condenser fan;
wherein the low profile TRU does not include an evaporator section, an evaporator, and an evaporator blower.

Aspect 18. The low profile TRU of aspect 17, wherein the condensing section includes a shell and tube heat exchanger.

Aspect 19. The low profile TRU of aspect 17, further comprising a straight tube as a front frame member of the low profile TRU.

Aspect 20. The low profile TRU of aspect 17, wherein the low profile TRU does not include an outer skin.

Aspect 21. A method of increasing a usable cargo space within an internal space of refrigerated transport unit, the method comprising:
providing a low profile transport refrigeration unit with a condensing section and without an evaporator section, an evaporator and a blower, the low profile transport refrigeration unit being disposed completely external to the internal space;
providing a remote evaporator unit attached to a ceiling or top wall of the refrigerated transport unit within the internal space.

Aspect 22. The method of aspect 21, further comprising:
removing at least one of a flat panel and a stanchion attached to a first end wall of the refrigerated transport unit within the internal space.

Aspect 23. The method of aspect 21, further comprising removing mounting pads disposed at the first end wall.

Aspect 24. The method of aspect 21, wherein the low profile transport refrigeration unit does not include an outer skin and a skin mounting bracket.

Aspect 25. The method of aspect 21, wherein the low profile transport refrigeration unit includes a straight tube as a front frame member of the low profile transport refrigeration unit.

Aspect 26. The method of aspect 21, further comprising:
replacing an evaporator cutout provided on the first end wall with a communication opening, the communication opening being smaller than the evaporator cutout;
providing a communication line between the low profile transport refrigeration unit and the remote evaporator unit.

## Claims

1. A low profile refrigerated transport unit, **characterized by** comprising:
a low profile container (210; 310) including a first end wall, a second end wall, a top wall and a bottom wall defining a low profile internal space (215; 315) configured to store cargo therein;
a low profile protective cage (220; 320) extending from the low profile container (210; 310), the low profile protective cage (220; 320) being external to the internal space (215; 315), and the low profile protective cage (220; 320) extending from the first end wall;
a low profile transport refrigeration unit (TRU) (250; 350) disposed within the low profile protective cage (220; 320) and attached to the first end wall external to the internal space (215; 315), the low profile TRU (250; 350) including a condensing section (252; 352) completely external to the internal space (250; 350);
wherein the low profile internal space (215; 315) has a low profile useable cargo length that is greater than a useable cargo length in a similar sized conventional refrigerated transport unit.

2. The low profile refrigerated transport unit of claim 1, wherein the low profile container is a low profile intermodal container (210; 310).

3. The low profile refrigerated transport unit of any of claims 1-2, further comprising:
a remote evaporator unit (255a,b) disposed on the top wall within the low profile internal space (215), the remote evaporator (255a,b) configured to be in fluid communication with the low profile TRU (250), wherein the low profile TRU (250) and the remote evaporator (255a,b) are configured to provide environmental control within the low profile internal space (215), and
wherein the low profile TRU (250) is completely external to the low profile internal space (215) and configured to be isolated from the low profile internal space (215).

4. The low profile refrigerated transport unit of claim 3, further comprising a communication line (257a,b) connecting the low profile TRU (250) disposed external of the low profile internal space (215) with the remote evaporator unit (255a,b) disposed within the low profile internal space (215),
wherein the first end wall includes a communication hole (245) and the communication line (257a,b) passing through the first end wall via the communication hole (245).

5. The low profile refrigerated transport unit of claim 3, wherein the low profile TRU (250) does not include an evaporator section, an evaporator, and an evaporator blower extending through the first end wall into the internal space (215).

6. The low profile refrigerated transport unit of any of claims 1-5, wherein the condensing section (252; 352) includes a condenser, a condenser fan, a compressor, an expansion valve, and a shell and tube heat exchanger.

7. The low profile refrigerated transport unit of any of claims 1, 2, and 6, wherein the low profile transport refrigeration unit (TRU) (350) includes an evaporator section (357), an evaporator, and an evaporator blower extending through the first end wall into the internal space (315).

8. The low profile refrigerated transport unit of any of claims 1-7, wherein the low profile refrigerated transport unit is a 53 foot low profile intermodal container and includes a low profile useable cargo length between 604 and 606 inches, and the conventional refrigerated transport unit is a 53 foot conventional intermodal container that includes a conventional useable cargo length between 593 and 596 inches.

9. A method of manufacturing a low profile refrigerated transport unit, the method comprising:
providing a 53 foot intermodal container, the 53 foot intermodal container including:
an internal space (215; 315) defined by a first end wall, a second end wall, a top wall and a bottom wall, the internal space configured to store cargo therein, the first end wall having a thickness between 4 to 4.5 inches; the second end wall including a rear door, the second end wall having a maximum thickness of 6 inches;
a low profile protective cage (220; 320) attached to the first end wall and external to the internal space (215; 315);
providing a low profile transport refrigeration unit (TRU) (250; 350) disposed within the low profile protective cage (220; 320), the low profile TRU (250; 350) including a condensing section (252; 352);
wherein a useable cargo length for storing cargo in the internal space (215; 315) is between 604 and 606 inches.

10. The method of claim 9, wherein the low profile TRU (250) includes a condensing section (252) and not including an evaporator section extending into the internal space (215), the low profile TRU (250) having a length between 19 and 20.5 inches, the internal space having a length between 604 to 606 inches.

11. The method of claim 10, further comprising providing a communication hole (245) between the low profile protective cage (220) and the internal space (215), the communication hole (245) having a height between .5 to 1 inch and a width between 2 to 2.5 inches in the first end wall.

12. The method of claim 10, wherein the low profile TRU (250) does not include an outer skin and a skin mounting bracket.

13. The method of claim 9, wherein the low profile TRU (350) includes a condensing section (352) disposed within the low profile protective cage (320) and an evaporator section (355) extending into the internal space (315), the condensing section (352) having a length of about 16.7 inches, and the evaporator section (355) having a length of about 4.5 inches and extending into the internal space (315) by .5 inches, the internal space (315) having a length between 604.5 to 606.5 inches.
